# EUROPÄISCHE PATENTSCHRIFT

(11) **EP 1 698 861 B1**
(45) Veröffentlichungstag und Bekanntmachung des Hinweises auf die Patenterteilung: **29.07.2009**
(21) Anmeldenummer: 06004133.2
(22) Anmeldetag: 01.03.2006
(51) Int. Cl.: G01D 5/14, G01R 33/10, G01B 7/00, G01D 5/16

(54) **Verfahren und Vorrichtung zur Bestimmung der jeweiligen Position wenigstens eines Messortes in einem Permanentmagnetfeld**
Method and device for determining the respective position of at least one measuring point in a permanent magnetic field
Procédé et dispositif destinés à la détermination de la position d'au moins un point de mesure dans un champ magnétique permanent

(30) Priorität: 01.03.2005 DE 102005009381
(43) Veröffentlichungstag der Anmeldung: 06.09.2006
(73) Patentinhaber: Robert Seuffer GmbH & Co. KG, 75365 Calw (DE)
(72) Erfinder: Dudzik, Rainer, 75394 Oberreichenbach (DE); Schaller, Martin, 75196 Remchingen (DE)
(74) Vertreter: Nöth, Heinz

(56) Entgegenhaltungen:
- EP-A- 1 464 918
- DE-A1- 19 737 142
- US-A- 4 622 644

## Beschreibung

Die Erfindung betrifft ein Verfahren nach dem Oberbegriff des Patentanspruches 1 und eine Vorrichtung nach dem Oberbegriff des Patentanspruches 13.

Ein derartiges Verfahren und eine derartige Vorrichtung sind aus US-A-4,622,644 bekannt. Dabei werden zur Bestimmung des Ortes und der Orientierung eines Permanentmagneten drei in drei orthogonalen Raumachsen die jeweiligen Magnetfeldstärken messenden Sensoreinrichtungen verwendet und die Signale der Sensoreinrichtungen in einer Auswerteeinrichtung ausgewertet.

Aus der DE 103 14 838 A1 sind ein Verfahren und eine Vorrichtung bekannt, bei denen an einem Messort im Permanentmagnetfeld in orthogonalen Achsen Magnetfeldstärken gemessen und aus den Messwerten die räumliche Position des Messortes gegenüber dem Permanentmagnetfeld ermittelt werden. Dabei wird aus der Messung der Magnetfeldstärken am Messort der Gradient (Krümmung und Richtung) des Magnetfeldes bestimmt.

Aufgabe der Erfindung ist es, eine Positionsbestimmung der eingangs genannten Art zu schaffen, bei der ein verringerter Aufwand bei der Bestimmung der räumlichen Position des Messortes erforderlich ist.

Diese Aufgabe wird beim Verfahren durch die Merkmale des Patentanspruches 1 und bei der Vorrichtung durch die Merkmale des Patentanspruches 13 gelöst.

Bei der Erfindung wird der wenigstens eine Messort, an welchem eine Sensoreinrichtung angeordnet sein kann, in wenigstens einem der beiden an die Magnetpole des Permanentmagneten in Polungsrichtung angrenzenden Messräume vorgesehen, Bei dem als Dipol ausgebildeten Permanentmagneten mit einem Nordpol und einem Südpol grenzen die beiden Messräume unmittelbar an den Nordpol und an den Südpol an. Ferner hat jeder der beiden möglichen Messräume die Eigenschaft, dass in zur Polungsrichtung (z-Richtung) bzw. Dipolachse des Permanentmagnetfeldes senkrechten Messebenen (x, y-Ebenen) die Magnetfeldstärken sich zunächst in einem linearen Bereich des Messraums sich linear verändern und anschließend in einem außen sich daran anschließenden nicht linearen Bereich sich nicht linear verändern. Der Messraum umfasst beide Bereiche und endet in dem Bereich, in welchen in den jeweiligen Messebenen keine für die Positionsbestimmung verwendbaren Änderungen der Magnetfeldstärken erfassbar sind.

Das Permanentmagnetfeld ist vorzugsweise um die Dipolachse des Permanentmagnetfeldes (z-Achse) homogen rotationssymmetrisch ausgebildet. Vorzugsweise kommt ein Permanentmagnet mit quadratischen Querschnitt oder ein Permanentmagnet mit kreisrundem Querschnitt zum Einsatz. Der Permanentmagnet ist vorzugsweise scheibenförmig ausgebildet.

Zur Erfassung der räumlichen Position des Messortes gegenüber dem Permanentmagnetfeld und insbesondere gegenüber dem Mittelpunkt des Permanentmagneten bzw. gegenüber einer oder beider Magnetpoloberflächen werden in der Messebene in zwei festgelegten orthogonalen Richtungen (x- und y-Achsen) und in einer dazu senkrechten Richtung (z-Achse) die Magnetfeldstärken mit den entsprechenden Magnetfeldsensoren gemessen.

Am Permanentmagneten oder an der Sensoreinrichtung ist ein dreidimensionales Koordinatensystem festgelegt, wobei durch die Achsen des Koordinatensystems die Richtungen bestimmt sind, in denen die Magnetfeldstärken im oben definierten Messraum gemessen werden. Die orthogonalen x- und y-Achsen bilden ein x, y-Koordinatensystem in der jeweiligen zur Dipolachse des Permanentmagneten senkrechten Messebene. Die dritte hierzu orthogonale z-Achse erstreckt sich je nach Lage des Messortes entlang der Dipolachse des Permanentmagneten oder parallel dazu. Dementsprechend sind die Magnetteldsensoren der Sensoreinrichtung, welche im Messraum angeordnet ist, ausgerichtet.

Im Vorfeld erfolgt eine Kalibrierung bzw. Justierung der Messeinrichtung, indem die Magnetfeldstärken im Messraum ausgemessen und zum Mittelpunkt des Permanentmagneten oder zur Magnetpoloberfläche, z.B. der Nordpoloberfläche in Bezug gesetzt werden. Diese Messwerte werden als Kalibrierwerte in einem Speicher der Auswerteeinrichtung, welche als elektronische Datenverarbeitungseinrichtung (Rechner) ausgebildet sein kann, mit Bezugnahme auf die jeweiligen Abstände zur Mitte des Permanentmagneten bzw. zur Poloberfläche tabellarisch gespeichert. Die Kalibrierwerte werden in den drei orthogonalen Richtungen des oben beschriebenen Koordinatensystems gemessen. Das Ausmessen der Magnetfeldstärken kann in einem bestimmten räumlichen Muster oder in einem zweidimensionalen Muster, d.h. in einer Ebene im Messraum erfolgen. Die Messpunkte können dabei vorgegebene Abstände, beispielsweise 50 µm oder auch weniger voneinander aufweisen. Die Abstände der Messpunkte können auch im Millimeterbereich liegen.

Bei der Positionsbestimmung werden die gemessenen Magnetfeldstärken in den orthogonalen Richtungen zu den im Vorfeld ermittelten und gespeicherten Kalibrierwerten in Bezug gesetzt und daraus die relative räumliche Position des Messortes, an welchem die Sensoreinrichtung angeordnet ist, gegenüber dem Permanentmagneten ermittelt.

Der Messraum hat einen Grundriss bzw. Querschnitt, der im wesentlichen der Magnetpoloberfläche entspricht, an welcher der Messraum unmittelbar angrenzt. Die Magnetpoloberfläche und ein am Umfang angrenzender Bereich bilden somit im wesentlichen die Grundfläche des Messraumes. Wie oben schon erläutert, kommt bevorzugt ein quadratischer oder kreisrunder Grundriss zur Anwendung.

Bei der Erfindung werden Relativpositionen zwischen dem Permanentmagneten und der Sensoreinrichtung bestimmt. In bevorzugter Weise wird die Sensoreinrichtung, welche in bekannter Weise als dreidimensional messende Sensoreinrichtung ausgebildet ist und Magnetfeldstärken in den drei orthogonalen Achsen misst, ortsfest angeordnet. Gegenüber der ortsfest angeordneten Sensoreinrichtung wird der Permanentmagnet, welcher mit einem Gegenstand fest verbunden sein kann, bewegt. Das bei der Auswertung der Messwerte für die Positionsbestimmung in den Messebenen zugrundegelegte x, y, z- Koordinatensystem, welches von den x-, y- und z- Messrichtungen der Sensoreinrichtung bestimmt ist, behält die oben erläuterte bestimmte Lage gegenüber dem Permanentmagneten und dem damit verbundenen Gegenstand während der Messungen bei. Hierdurch lässt sich eine genaue Positionsbestimmung des bewegten Gegenstandes gegenüber der ortsfest angeordneten Sensoreinrichtung (Messort) bestimmen. Hierbei kann der Messort oder ein bestimmter Teil des Messortes, an welchem die Sensoreinrichtung angeordnet ist, eine Referenzposition oder Nullpunkt-Lage für die Positionsbestimmung des Permanentmagneten bzw. des damit verbundenen Gegenstandes bilden. Der Nullpunkt bzw. die Referenzposition kann auch außerhalb des Messortes mit festem Lagebezug liegen.

Eine weitere bevorzugte Ausführungsform besteht darin, dass der Permanentmagnet ortsfest angeordnet ist und die Sensoreinrichtung sich gegenüber dem Permanentmagneten bewegt. Hierbei ist der Gegenstand, dessen Position bestimmt werden soll, mit der Sensoreinrichtung vorzugsweise fest verbunden. Die Referenzposition bzw. Nuillage für die Positionsbestimmung kann durch die Mitte des Permanentmagneten oder die Mitte der Magnetpoloberfläche bestimmt sein. Der Nullpunkt bzw. die Referenzposition kann jedoch auch außerhalb des Permanentmagneten mit einem festen Lagebezug zum Permanentmagneten liegen.

Anhand der Figuren wird die Erfindung noch näher erläutert.

Es zeigt:
- Fig. 1: in schematischer Darstellung ein Ausführungsbeispiel der Erfindung;
- Fig. 2: in vergrößerter Darstellung den Grundriss eines Messraums, welcher beim Ausführungsbeispiel der Fig. 1 zur Anwendung kommt;
- Fig. 3: ein Blockschaltbild für ein Ausführungsbeispiel;
- Fig. 4, 5: Koordinatendarstellungen zur Erläuterung der Arbeitsweise des Ausführungsbeispiels;
- Fig. 6: ein Blockdiagramm zur Erläuterung eines weiteren Ausführungsbeispiels der Erfindung; und
- Fig. 7: eine graphische Darstellung zur weiteren Erläuterung des Ausführungsbeispiels der Fig. 6

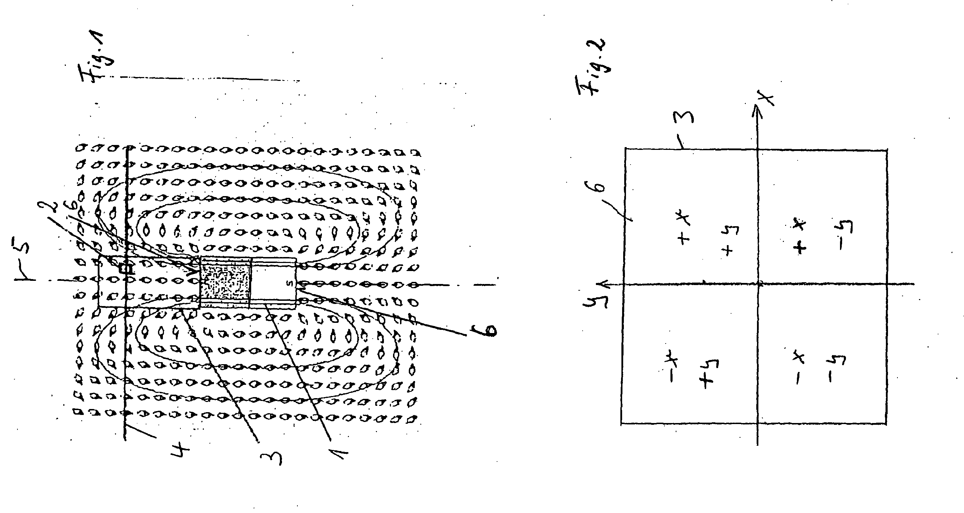

Das in der Fig. 1 dargestellte Ausführungsbeispiel zeigt einen als Dipol ausgebildeten Permanentmagneten 1. Die zeichnerische Darstellung des Permanentmagneten 1 ist schematisch. In der Praxis wir eine relativ flache, im wesentlichen scheibenförmige Form (dicke Scheibe) des Permanentmagneten 1 bevorzugt. Eine Dipolachse 5 wird vom Nordpol N und Südpol S des Permanentmagneten 1 gebildet. Senkrecht zur Dipolachse 5 erstrecken sich Poloberflächen 6 am Nordpol und Südpol. Unmittelbar angrenzend an die Poloberflächen 6 befinden sich Messräume 3, von denen der an der Poloberfläche 6 des Nordpols angrenzende Messraum 3 in Fig. 1 schematisch dargestellt ist. Dieser Messraum 3 hat in Anpassung an den Querschnitt des quaderförmigen Permanentmagneten 1 rechteckigen oder quadratischen Querschnitt, welcher in Fig. 2 vergrößert dargestellt ist. Im in der Fig. 1 mit durchgehenden Linien begrenzten linearen Bereich des Messraums 3 verändern sich die Magnetfeldstärken in einer zur Dipolachse 5 senkrechten Messebene 4 (x, y-Ebene) sowie in Richtung der Dipolachse 5 (z-Achse) linear. In diesem Messbereich 3 ändern sich die Richtungen der Magnetfeldlinien somit linear. Die Grundfläche des Messraumes 3 wird von der jeweiligen Poloberfläche 6 des Nordpols oder Südpols des Permanentmagneten 1 gebildet. Nordpol und Südpol des Permanentmagneten liegen an entgegengesetzten Enden des beispielsweise als dicke Scheibe ausgebildeten Permanentmagneten. Beim dargestellten Ausführungsbeispiel besitzt der Permanentmagnet senkrecht zur Dipolachse 5 einen quadratischen Querschnitt, wie aus Fig. 2 zu ersehen ist. Der Permanentmagnet kann auch einen anderen Querschnitt, beispielsweise kreisrunden Querschnitt aufweisen. Der Messraum 3 ist nicht nur auf den linearen Bereich begrenzt, sondern umfasst auch den sich außen daran anschließenden Bereich, in welchem die Magnetfeldstärken in den x- und y-Richtungen sich in den jeweiligen Messebenen nach außen hin verändern. Soweit in diesem Bereich die Änderung der Messfeldstärken für die Positionsbestimmung ausgewertet werden kann, gehört dieser nicht lineare Bereich ebenfalls zum Messraum 3.

Aufgrund der Änderung und insbesondere der linearen Änderung der Magnetfeldstärke in Abhängigkeit vom jeweiligen Messort innerhalb des Messraumes 3 kann eine Positionsbestimmung des jeweiligen Messortes gegenüber dem Permanentmagneten 1 erreicht werden. Hierzu wird dem Messraum 3 ein dreidimensionales Koordinatensystem (x, y, z-Koordinatensystem) mit jeweils zueinander orthogonal liegenden x-, y- und z-Achsen zugeordnet. Bei dem in den Figuren dargestellten Ausführungsbeispiel erfolgt die Zuordnung so, dass der Nullpunkt des Koordinatensystems in der Mitte der jeweiligen Poloberfläche 6 liegt. Beim dargestellten Ausführungsbeispiel befindet sich der Nullpunkt des Koordinatensystems in der Mitte der Poloberfläche am Nordpol N. Die Mitte ist bestimmt durch den Schnittpunkt der beiden Diagonalen in der rechteckigen oder quadratischen Poloberfläche 6. x- und y-Achsen des Koordinatensystems liegen in dieser Poloberfläche 6. Bei einer kreisrunden Poloberfläche ist der Kreismittelpunkt der Nullpunkt des Koordinatensystems. Die x- und y-Achse liegen senkrecht zu den seitlichen Begrenzungen der quadratischen Poloberfläche 6, wie aus Fig. 2 zu ersehen ist. Die z-Achse des dreidimensionalen Koordinatensystems erstreckt sich längs der Dipolachse 5, die durch den Nullpunkt des in der Fig. 2 dargestellten x-, y-Koordinatensystems verläuft.

Aufgrund dieser Voraussetzungen ist man in der Lage, die relative Position eines Messortes, an welchem sich eine Sensoreinrichtung 2 befindet, gegenüber dem Permanentmagneten 1 zu bestimmen. Mit der Sensoreinrichtung 2, welche im Messraum 3 angeordnet ist, können in drei zueinander orthogonalen Richtungen die Magnetfeldstärken gemessen werden. Die drei orthogonalen Messrichtungen der Sensoreinrichtung 2 haben einen vorgegebenen Lagebezug zu dem am Permanentmagneten 1 vorgesehenen dreidimensionalen Koordinatensystem, welches als Ausführungsbeispiel beschrieben wurde. Vorzugsweise sind die Messrichtungen der dreidimensional messenden Sensoreinrichtung parallel zu den x-, y- und z-Achsen des am Permanentmagneten 1 vorgesehenen Koordinatensystems ausgerichtet. Die Magnetfeldsensoren, mit denen die Magnetfeldstärken jeweils in den drei orthogonalen Richtungen gemessen werden, sind dementsprechend angeordnet. Vorzugsweise ist die Sensoreinrichtung 2 mit ihren Magnetfeldsensoren ortsfest angeordnet und der Permanentmagnet 1 wird gegenüber der Sensoreinrichtung 2 bewegt. Die Bewegung des Permanentmagneten 1 ist darauf beschränkt, dass die Sensoreinrichtung 2 bei der Positionsbestimmung im Messraum 3 sich befindet.

Mit dem Permanentmagneten 1 kann ein nicht näher dargestellter Gegenstand, beispielsweise ein bestimmtes bewegliches Teil eines Joysticks, eines Einstellhebels oder anderen Einstelleinrichtung, einer Betätigungseinrichtung oder dergleichen fest verbunden sein. Mit der beschriebenen Messanordnung kann die Positionierung und auch die Bewegung dieses Gegenstandes gegenüber der Sensoreinrichtung 2 bestimmt werden.

Eine weitere bevorzugte Ausführungsform besteht darin, dass der Permanentmagnet 1 ortsfest angeordnet ist und die dreidimensional messende Sensoreinrichtung 2 demgegenüber im Bereich des Messraums 3 bewegt wird. Bei dieser Ausführungsform ist der Gegenstand, dessen Position festgestellt werden soll, mit der Sensoreinrichtung fest verbunden.

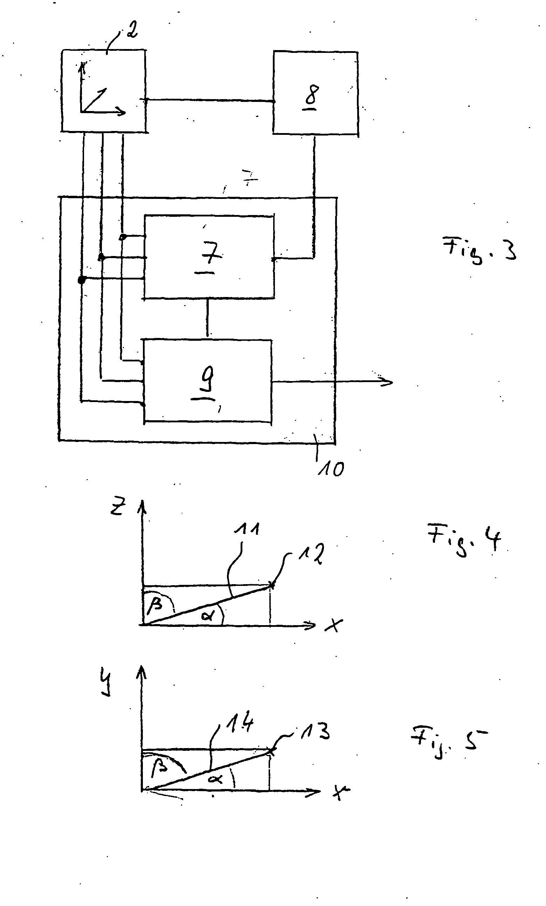

Um aus den im Messraum 3 dreidimensional gemessenen Magnetfeldstärken die Positionsbestimmung zu erreichen, wird das Magnetfeld des Permanentmagneten zumindest im Messraum 3 bei einem Kalibrier- oder Justagevorgang im Vorfeld ausgemessen und die Messwerte mit geometrischen Abstandswerten in Bezug gesetzt. Dabei wird für die jeweiligen dreidimensional bestimmten Magnetfeldstärken an einem bestimmten Messort auch der Abstand des Messortes vom Permanentmagneten 1 bestimmt und zu den Magnetfeldstärken des Messortes in Bezug gesetzt. Insbesondere wird hierbei der Abstand der Messebene 4 (x-, y-Ebene) gegenüber der Poloberfläche 6 bzw. gegenüber der Mitte des Permanentmagneten 1, welche zwischen dem Nordpol und dem Südpol liegt, bestimmt. Zusätzlich zu diesem Abstand in z-Richtung wird der Abstand der Messstelle von der Dipolachse 5, d.h. von dem Nullpunkt im x-, y-Koordinatensystems der jeweiligen Messebene bestimmt. Dies kann dadurch erfolgen, dass die x-, y-Koordinaten der Messstelle in diesem Koordinatensystem bestimmt werden. Die dreidimensional gemessenen Werte werden als Kalibrierwerte bezogen auf die oben erläuterten Abstände tabellarisch in einem Speicher 7, einer noch zu erläuternden elektronischen Auswerteeinrichtung 10 (Fig. 3), welche als Datenverarbeitungseinrichtung (Rechner) ausgebildet sein kann, gespeichert. Wie aus Fig. 3 zu ersehen ist, sind hierzu an den Speicher 7 die Sensoreinrichtung 2 und eine Abstandsangabeeinrichtung 8 angeschlossen. Die Abstandsangabeeinrichtung 8 kann die entsprechenden oben erläuterten Abstände automatisch messen oder kann als Eingabeeinrichtung ausgebildet sein, in welche die entsprechenden Abstände eingegeben werden und welche dazu Signale dem Speicher 7 zuleitet. Im Speicher 7 werden die Messwerte der Sensoreinrichtung 2 zugeordnet zu den Abständen tabellarisch als Kalibrierwerte gespeichert. Bei der Bestimmung der Kalibrierwerte kann der gesamte Messraum 3 ausgemessen werden. Da die Beträge der Messwerte für gleiche x- und y-Koordinaten in den Räumen des Messraums 3 oberhalb der vier Quadranten des in der Fig. 2 dargestellten x-, y-Koordinatensystems gleich sind und lediglich die Richtungen sich voneinander unterscheiden, wie in Fig. 2 mit den Koordinaten Vorzeichen kenntlich gemacht ist, reicht es jedoch aus, die Kalibrierwerte nur im Messraum 3 oberhalb eines der vier Quadranten auszumessen. Die Ermittlung des entsprechenden Quadrantenraums bei der Messung kann mit Hilfe der Logikschaltung 9 aufgrund der Sensoreinrichtung 2 gelieferten, dreidimensionalen Messwerte, aus welchen die Richtung des Magnetfeldes erkannt werden kann, erfolgen.

Bei der Positionsbestimmung eines mit dem Permanentmagneten 1 verbundenen Gegenstandes befindet sich die Sensoreinrichtung 2 (Messort) in einer bestimmten räumlichen Position innerhalb des Messraumes 3. Mit Hilfe der Sensoreinrichtung 2 werden in den Richtungen der x-, y- und z-Achsen die Magnetfeldstärken an diesem Messort gemessen und einer Logikschaltung 9 der Auswerteeinrichtung 10 zugeleitet. In der Logikschaltung 9 werden die Messwerte der Magnetfeldstärken mit den gespeicherten Kalibrierwerten in Beziehung gesetzt, beispielsweise verglichen und dabei die dazugehörigen Abstände des Messortes vom Permanentmagneten bestimmt. Die Abstände können, wie oben schon erläutert, bezogen sein auf die Mitte der Poloberfläche 6 oder die Mitte des Permanentmagneten 1 zwischen den beiden Polen.

Eine weitere Einsparung an Speicherraum ergibt sich dadurch, dass die Kalibrierwerte nur in einer durch die Dipolachse 5 gehenden Ebene, vorzugsweise in der durch die x- und y-Achsen aufgespannten Ebene (Fig. 4) ermittelt werden. Hierbei werden mit Hilfe der Sensoreinrichtung 2 in der x-, z-Ebene (Kalibrierebene) dreidimensional die Magnetfeldstärken in unterschiedlichen Kalibrierpunkten 12 mit x-, z-Koordinaten gemessen und so die im Messraum 3 liegende x-, z-Ebene mit bestimmten Abständen der Kalibrierpunkte 12 voneinander ausgemessen. Die bei der Kalibrierung ausgemessenen Kalibrierpunkte 12 im Messraum 3 können bestimmte Abstände, beispielsweise 1,0 mm voneinander in den jeweiligen Koordinatenrichtungen aufweisen. Zu den jeweils ausgemessenen Kalibrierpunkten 12 werden in der Speichereinrichtung den in z-Richtung gemessenen z-Werten der jeweiligen Magnetfeldstärken zugeordnete Kalibriersteigungen (Kalibrierwinkel α oder β) von Kalibriergeraden 11 gespeichert. Diese Kalibrierwinkel ergeben sich aus einer Kalibriergeraden 11, welche den Nullpunkt des beim Kalibrieren verwendeten x-, z- verwendeten Koordinatensystems (Fig. 4) mit dem jeweiligen Kalibrierpunkt 12, welcher bestimmte x-, z-Koordinaten aufweist, verbindet. Der Winkel zwischen der Kalibriergeraden 11 und der x-Achse oder der z-Achse ist der Kalibrierwinkel α oder β und ein Maß für den z-Koordinatenwert, d.h. für den Abstand des Kalibrierpunktes 12 von der Poloberfläche 6 in Richtung der Dipolachse 5. Diese Kalibriersteigung bzw. dieser Kalibrierwinkel ist somit ferner ein Maß für den Abstand der Messebene 4 von der Poloberfläche 6. Hierbei kann der zwischen der x-Achse und der zwischen der z-Achse und der Kalibriergeraden 11 liegende Winkel, d.h. einer der beiden Komplementwinkel α, β als Kalibrierwinkel bzw. Kalibriersteigung mit Zuordnung zum z-Wert der gemessenen Feldstärke in dieser Richtung als Maß für den Abstand der Messebene gespeichert werden.

Da innerhalb des Messraumes 3 ausgehend vom Mittelpunkt des Permanentmagneten 1 in allen drei Raumrichtungen sich das Magnetfeld in gleicher Weise linear verändert, kann bei der Ortsbestimmung des Messortes im x-, y-Koordinatensystem aus den entsprechenden x- und y-Werten der gemessenen Magnetfeldstärken ebenfalls die Steigung einer Verbindungslinie (Messgerade 14) zwischen dem Nullpunkt des x-, y-Koordinatensystems zur Messstelle 13 mit den Komplementwinkeln α, β (Fig. 5) bestimmt werden. Durch Vergleich und in Beziehung setzen zum gespeicherten Kalibrierwinkel α oder β, der für den gemessenen x-Wert als Kalibrierwinkel im Speicher vorliegt, wird mit Hilfe der Logikschaltung 9 auch der Abstand (z-Wert) der Messebene 4 ermittelt.

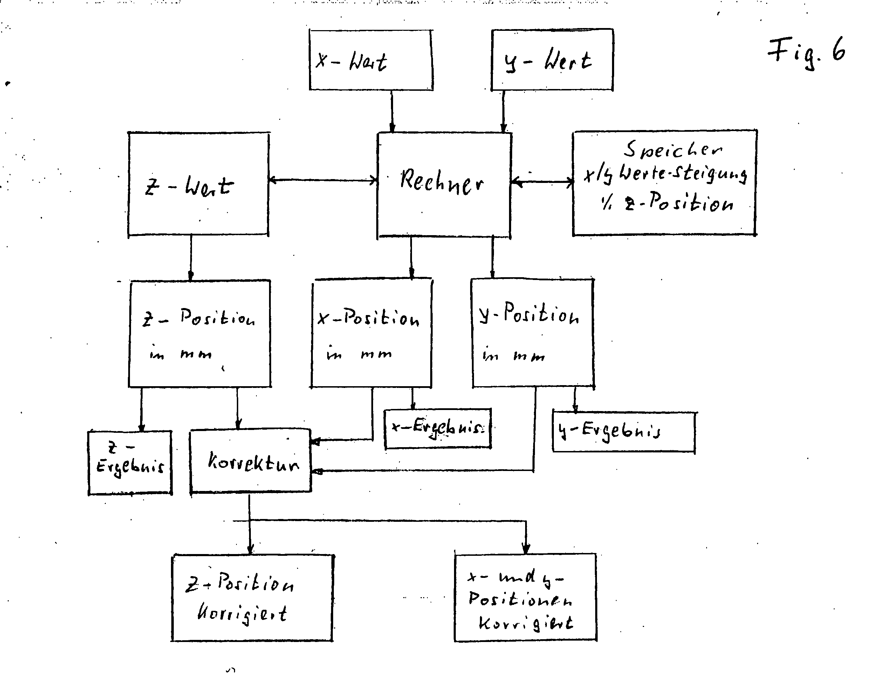

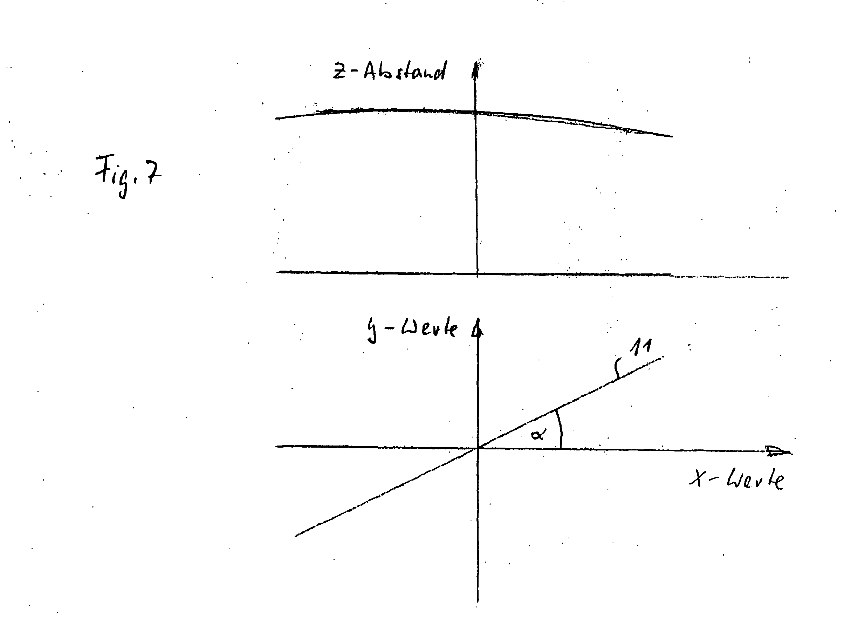

Anhand der Figuren 6 und 7 wird ein weiteres Ausführungsbeispiel der Erfindung erläutert. Bei diesem Ausführungsbeispiel werden die x-Werte und y-Werte der in x-Richtung und y-Richtung gemessenen Feldstärkewerte beim Kalibrieren in einem x-Werte- und y-Werte-Koordinatensystem gegeneinander aufgetragen, wie es in Figur 7 unten dargestellt ist. Diese in einer bestimmten Messebene gemessenen Werte liegen im Wesentlichen auf einer Geraden (Kalibriergeraden 11), welche gegenüber der x-Werteachse eine bestimmte Steigung bzw. einem bestimmten Kalibrierwinkel *α* aufweist. In unterschiedlichen Messebenen liegen die x-Werte und y-Werte auf Kalibriergeraden 11, die unterschiedliche Steigungen bzw. Kalibrierwinkel *α* aufweisen. Für die unterschiedlichen Messebenen werden die zugehörigen Geraden (Kalibriergeraden 11) im x-Werte- und y-Werte-Koordinatensystem von einem Rechner ermittelt und in einem Speicher gespeichert. Dabei wird ein Bezug hergestellt zu den z-Werten, d. h. zu den Abständen, welche die jeweiligen Messebenen und die für die jeweiligen Messebenen ermittelten Geraden zur Poloberfläche 6 und damit zum Permanentmagneten 1 haben. Die entsprechenden Funktionen werden tabellarisch in dem mit dem Rechner verbundenen Speicher gespeichert. Die x-, y- und z-Positionen können hierbei in mm-Abständen ausgemessen und gespeichert werden. In der Figur 7 ist im oberen Diagramm der z-Abstand der Messebene gezeigt, für welche die im darunter liegenden Diagramm auf der Kalibriergeraden 11 liegenden x- und y- Werte bei der Kalibrierung gemessen wurden. Auf Grund dieser Kalibrierung vereinfacht sich die Ortsbestimmung des Messortes im Permanentmagnetfeld dahingehend, dass die x-Werte und y-Werte der Magnetfeldstärke am Messort bestimmt werden. Aus diesen beiden Werten lässt sich die Steigung der zugehörigen Geraden, welche im Speicher gespeichert ist mit Hilfe des Rechners bestimmen und eine Zuordnung zum dazugehörigen z-Wert ermitteln. Mit Hilfe der erläuterten zweidimensionalen Feldstärkemessung in x- und y- Richtung lässt sich dann mit Hilfe der bei der Kalibrierung gewonnen Kalibriergeraden 11 auch die dritte Raumkoordinate (z-Position) des Messortes bestimmen.

Wie schon erläutert sind die jeweiligen x-, y- und z-Werte der Magnetfeldstärke metrischen Werten, beispielsweise mm-Abständen zugeordnet.

Mit Hilfe der erläuterten Positionsbestimmungen lassen sich auch zeitliche Bewegungsabläufe bestimmen, indem Positionsbestimmungen zu unterschiedlichen Zeitpunkten durchgeführt werden. Ferner kann beispielsweise aus unterschiedlichen Positionsbestimmungen, beispielsweise aus zwei Positionsbestimmungen eine Gewichtskraft ermittelt werden.

Im Randbereich des Messraumes 3 weichen die x-, y- und z-Werte vom linearen Bezug zueinander ab. Hierfür kann eine Korrektur unter Berücksichtigung der im Randbereich des Messraumes 3 bei der Kalibrierung ermittelten Werte durchgeführt werden.

### Bezugszeichenliste

- 1: Permanentmagnet
- 2: Sensoreinrichtung
- 3: Messraum
- 4: Messebene
- 5: Dipolachse
- 6: Poloberfläche
- 7: Speicher
- 8: Abstandsangabeeinrichtung
- 9: Logikschaltung
- 10: Auswerteeinrichtung
- 11: Kalibriergerade
- 12: Kalibrierpunkt
- 13: Messpunkt
- 14: Messgerade

## Patentansprüche

1. Verfahren zur Bestimmung der jeweiligen Position wenigstens eines Messortes in einem Dipol-Permanentmagnetfeld, bei dem Magnetfeldstärken am Messort in orthogonalen Achsen gemessen werden, und aus den Messwerten die relative Position von Messort und Permanentmagnetfeld zueinander ermittelt wird, wobei die Magnetfeldstärken in wenigstens einem der beiden unmittelbar an die Magnetpole in Richtung der Dipolachse angrenzenden Messräume gemessen werden, in welchen innerhalb jeweiliger zur Dipolachse (z-Richtung) des Permanentmagnetfeldes senkrechten Messebenen (x, y-Ebenen) die Magnetfeldstärke sich verändert,
**dadurch gekennzeichnet, dass** der Abstand der Dipolachse vom Messort aus den beiden Messwerten der Magnetfeldstärken in den orthogonalen Richtungen, welche in der jeweiligen zur Dipolachse senkrechten Messebene (x, y-Ebene) liegen, ermittelt wird und der Abstand der Messebene vom Mittelpunkt des Permanentmagneten oder von der Magnetpoloberfläche aus dem Messwert der Magnetfeldstärke in der dritten Richtung (z-Achse) und/oder aus den beiden in der Messebene (x, y-Ebene) ermittelten Messwerten der Magnetfeldstärken bestimmt wird.

2. Verfahren nach Anspruch 1,
**dadurch gekennzeichnet, dass** die Magnetfeldstärken in einem linearen Bereich des Messraums gemessen werden, in welchem in jeweiligen zur Dipolachse (z-Richtung) des Permanentmagnetfeldes senkrechten Messebenen die Magnetfeldstärken sich linear ändern.

3. Verfahren nach Anspruch 1 oder 2,
**dadurch gekennzeichnet, dass** die Magnetfeldstärken ferner in einem nicht-linearen Bereich des Messraums gemessen werden, der außen in den drei zueinander orthogonalen Richtungen unmittelbar an den linearen Bereich des Messraums angrenzt.

4. Verfahren nach einem der Ansprüche 1 bis 3,
**dadurch gekennzeichnet, dass** die drei orthogonalen Richtungen (x-, y-, z-Achsen), in denen die Magnetfeldstärken gemessen werden, ortsfest gehalten werden.

5. Verfahren nach einem der Ansprüche 1 bis 4,
**dadurch gekennzeichnet, dass** zum Kalibrieren die Magnetfeldstärken in wenigstens einem der beiden Messräume in einem bestimmten Raummuster gemessen und gespeichert werden.

6. Verfahren nach Anspruch 5,
**dadurch gekennzeichnet, dass** durch die Kalibrierung ein Bezug zwischen den in der jeweiligen Messebenen (x, y-Ebene) ermittelten Magnetfeldstärken und den zugehörigen Abständen der Messebenen von der Magnetfeldoberfläche oder dem Mittelpunkt des Permanentmagneten hergestellt wird.

7. Verfahren nach einem der Ansprüche 1 bis 6,
**dadurch gekennzeichnet, dass** beim Kalibrieren für die jeweiligen Kalibrierpunkte in den zur Dipolachse senkrechten Messebenen die in x-Richtung gemessenen Feldstärkewerte (x-Werte) und die in der dazu senkrechten y-Richtung gemessenen Feldstärkewerte (y-Werte), welche in einem x-Werte- und y-Werte-Koordinatensystem im Wesentlichen auf Geraden mit bestimmten Abständen der Messebenen von der Poloberfläche zugeordneten Steigungen liegen, gespeichert werden.

8. Verfahren nach Anspruch 7,
**dadurch gekennzeichnet, dass** die Steigungen der Geraden (Kalibriergeraden) den Abständen der zugehörigen Messebenen von der Poloberfläche zugeordnet werden.

9. Verfahren nach einem der Ansprüche 1 bis 8,
**dadurch gekennzeichnet, dass** beim Bestimmen der räumlichen Lage des Messortes die Abstände des Messortes zur Dipolachse (z-Achse) aus gemessenen x-Werten und y-Werten der Feldstärke ermittelt werden.

10. Verfahren nach einem der Ansprüche 1 bis 9,
**dadurch gekennzeichnet, dass** die bei der Kalibrierung und der Messung erfassten Feldstärkewerte metrischen Abstandswerten zugeordnet werden.

11. Verfahren nach einem der Ansprüche 1 bis 10,
**dadurch gekennzeichnet, dass** aus den Positionsbestimmungen zeitliche Bewegungsabläufe bestimmt werden.

12. Verfahren nach einem der Ansprüche 1 bis 11,
**dadurch gekennzeichnet, dass** aus den Positionsbestimmungen Gewichtsmessungen abgeleitet werden.

13. Vorrichtung zur Bestimmung einer Position eines Messortes in einem Permanentmagnetfeld mit einem das Magnetfeld erzeugenden, als Dipol ausgebildeten Permanentmagneten (1) und wenigstens einer Sensoreinrichtung (2), welche die Magnetfeldstärke am jeweiligen Messort in orthogonalen Achsen erfasst, und einer Auswerteeinrichtung (10), welche aus den Messwerten die räumliche Position des Messortes im Magnetfeld ermittelt, wobei
die wenigstens eine Sensoreinrichtung (2) in wenigstens einem der beiden unmittelbar an die Pole (N, S) des Permanentmagneten (1) angrenzenden Messräume (3, 4) angeordnet ist, wobei im jeweiligen Messraum (3, 4) in zur Richtung der Dipolachse (5) des Permanentmagnetfeldes senkrechten Ebenen die Magnetfeldstärke sich verändert,
**dadurch gekennzeichnet, dass** die Auswerteeinrichtung einen Speicher (7) aufweist, in welchem die Magnetfeldstärken wenigstens eines Messraumes (3) in Abhängigkeit vom Abstand zur Magnetpoloberfläche (6) oder zum Mittelpunkt des Permanentmagneten(1)und vom Abstand zur Dipolachse (5) gespeichert sind.

14. Vorrichtung nach Anspruch 13,
**dadurch gekennzeichnet, dass** die Sensoreinrichtung (2) Magnetfeldsensoren aufweist, welche in einer zur Magnetpoloberfläche parallelen Messebene (x, y-Ebene) in zwei orthogonalen Richtungen (x, y-Achse) und in einer dazu orthogonalen Richtung (z-Achse) die Magnetfeldstärken messen.

15. Vorrichtung nach Anspruch 13 oder 14,
**dadurch gekennzeichnet, dass** die Sensoreinrichtung (2) oder der Permanentmagnet (1) ortsfest angeordnet ist und der Permanentmagnet (1) oder die Sensoreinrichtung (2) beweglich angeordnet ist.

16. Vorrichtung nach Anspruch 15,
**dadurch gekennzeichnet, dass** der Permanentmagnet (1) und die Sensoreinrichtung (2) entlang der Dipolachse (5) des Permanentmagneten (1) oder parallel dazu und/oder in einer zur Dipolachse (5) senkrechten Ebene relativ zueinander bewegbar sind.

17. Vorrichtung nach einem der Ansprüche 13 bis 16,
**dadurch gekennzeichnet, dass** der zur Magnetpoloberfläche (6) parallele Querschnitt des Messraums (3) etwa der geometrischen Gestalt der Magnetpoloberfläche (6) entspricht.

18. Vorrichtung nach einem der Ansprüche 13 bis 17,
**dadurch gekennzeichnet, dass** der Permanentmagnet (1) und die Sensoreinrichtung (2) Bestandteile einer Gewichtsmesseinrichtung sind.

## Claims

1. A method for determining respective position of at least one measuring site in a field of a dipole permanent magnet, in which magnetic field intensities at the measuring site are being measured in orthogonal axes, and the relative position of the measuring site and the field of the permanent magnet to each other is being determined by means of the measured values, wherein the magnetic field intensities are being measured in at least one of either measuring zones adjoining direct to the magnetic poles in the direction of the dipole axis, in which measuring zones the magnetic field intensity varies inside of respective measuring planes (x, y planes) perpendicular to the dipole axis (z direction) of the field of the permanent magnet,
**characterized in that** the distance of the dipole axis to the measuring site is being determined by means of the two measured values of the magnetic field intensities in orthogonal directions located in the respective measuring plane (x, y plane) perpendicular to the dipole axis, and the distance of the measuring plane to the center of the permanent magnet or to the magnetic pole surface is being determined by means of the measured value of the magnetic field intensity in the third direction (z axis) and/or by means of the two measured values of the magnetic field intensities determined in the measuring plane (x, y plane).

2. The method according to claim 1,
**characterized in that** the magnetic field intensities are being measured in a linear portion of the measuring zone, in which the magnetic field intensities vary linearly in respective measuring planes perpendicular to the dipole axis (z direction) of the field of the permanent magnet.

3. The method according to claim 1 or 2,
**characterized in that** further the magnetic field intensities are being measured in a non-linear portion of the measuring zone which is externally adjoining direct to the linear portion of the measuring zone in three directions orthogonal to each other.

4. The method according to any one of the claims 1 to 3,
**characterized in that** the three orthogonal directions (x, y, z axes) in which the magnetic field intensities are measured, are hold fixed.

5. The method according to any one of the claims 1 to 4,
**characterized in that** for calibrating the magnetic field intensities are being measured in at least one of either measurement zones in a dedicated spatial pattern and are stored.

6. The method according to claim 5,
**characterized in that** by calibrating a relationship is established between the magnetic field intensities determined in the respective measuring planes (x, y plane) and the associated distances of the measuring planes to the magnetic field surface or to the center of the permanent magnet.

7. The method according to any one of the claims 1 to 6,
**characterized in that** during calibration for the respective calibrations sites in the measuring planes perpendicular to the dipole axis, the field intensity values measured in x direction (x values) and the field intensity values measured in the y direction perpendicular thereto (y values) are being stored, which, in a x value and y value coordinate system, are located substantially on straight lines having slopes associated to dedicated distances of the measuring planes to the pole surface.

8. The method according to claim 7,
**characterized in that** the slopes of the straight lines (calibration straight lines) are being associated to the distances of the corresponding measuring planes to the pole surface.

9. The method according to any one of the claims 1 to 8,
**characterized in that** during determining the spatial position of the measuring site, the distances of the measuring site to the dipole axis (z axis) is being determined by means of measured x values and y values of the field intensity.

10. The method according to any one of the claims 1 to 9,
**characterized in that** the field intensity values detected during calibrating and measuring are being associated to metric distance values.

11. The method according to any one of the claims 1 to 10,
**characterized in that** time trajectories are being determined by means **o**f the determined positions.

12. The method according to any one of the claims 1 to 11,
**characterized in that** weight measurements are being derived from the determined positions.

13. A device for determining a position of a measuring site in a field of a permanent magnet, comprising a permanent magnet (1) formed as a dipole and generating the magnetic field, at least one sensor means (2) detecting magnetic field intensity at the respective measuring site in orthogonal axes, and an evaluation means (10) determining the spatial position of the measuring site in the magnetic field by means of the measured values, wherein
said at least one sensor means (2) is arranged in at least one of either measuring zones (3, 4) adjoining direct to the poles (N, S) of the permanent magnet (1), wherein the magnetic field intensity varies in the respective measuring zone (3, 4) in planes perpendicular to the direction of the dipole axis (5) of the field of the permanent magnet,
**characterized in that** the evaluation means comprises a memory (7) storing the magnetic field intensities of at least one of the measuring zones (3) depending on the distance to the magnetic pole surface (6) or to the center of the permanent magnet (1) and on the distance to the dipole axis (5).

14. The device according to claim 13,
**characterized in that** the sensor means (2) comprises magnetic field sensors measuring magnetic field intensities in a measuring plane (x, y plane) parallel to the magnetic pole surface in two orthogonal directions (x, y axis) and in a direction orthogonal thereto (z axis).

15. The device according to claim 13 or 14,
**characterized in that** the sensor means (2) or the permanent magnet (1) is arranged fixedly, and the permanent magnet (1) or the sensor means (2) is arranged movably.

16. The device according to claim 15,
**characterized in that** the permanent magnet (1) and the sensor means (2) are movable relative to each other along the dipole axis (5) of the permanent magnet (1) or parallel thereto and/or in a plane perpendicular to the dipole axis (5).

17. The device according to any one of the claims 13 to 16,
**characterized in that** a cross section of the measuring zone (3) parallel to the magnetic pole surface (6) corresponds approximately to the geometric shape of the magnetic pole surface (6).

18. The device according to any one of the claims 13 to 17,
**characterized in that** the permanent magnet (1) and the sensor means (2) are component parts of a weight measuring device.

## Revendications

1. Procédé pour la détermination de la position respective d'au moins un point de mesure dans un champ magnétique permanent dipolaire, dans lequel les intensités du champ magnétique au point de mesure sont mesurées sur des axes orthogonaux et la position relative du point de mesure et du champ magnétique permanent est déterminée l'une par rapport à l'autre à partir des valeurs de mesure, les intensités du champ magnétique étant mesurées dans au moins une des deux zones de mesure qui sont directement adjacentes aux pôles magnétiques dans la direction de l'axe dipolaire, dans lesquelles l'intensité du champ magnétique varie au sein de respectifs plans de mesure (plan xy) perpendiculaires à l'axe dipolaire (direction z) du champ magnétique permanent,
**caractérisé en ce que** la distance de l'axe dipolaire au point de mesure est déterminée à partir des deux valeurs de mesure des intensités du champ magnétique dans les directions orthogonales, lesquelles sont dans le respectif plan de mesure (plan xy) perpendiculaire à l'axe dipolaire, et la distance du plan de mesure au centre de l'aimant permanent ou à la surface de pôle magnétique est déterminée à partir de la valeur de mesure de l'intensité du champ magnétique dans la troisième direction (axe z) et/ou à partir des deux valeurs de mesure des intensités du champ magnétique déterminées dans le plan de mesure (plan xy).

2. Procédé selon la revendication 1, **caractérisé en ce que** les intensités du champ magnétique sont mesurées dans un domaine linéaire de la zone de mesure dans lequel les intensités du champ magnétique varient linéairement dans de respectifs plans de mesure perpendiculaires à l'axe dipolaire (direction z) du champ magnétique permanent.

3. Procédé selon la revendication 1 ou 2, **caractérisé en ce que** les intensités du champ magnétique sont en outre mesurées dans un domaine non linéaire de la zone de mesure qui borde directement à l'extérieur le domaine linéaire de la zone de mesure dans les trois directions orthogonales entre elles.

4. Procédé selon l'une quelconque des revendications 1 à 3, **caractérisé en ce que** les trois directions orthogonales (axes x, y, z), dans lesquelles les intensités du champ magnétique sont mesurées, sont maintenues fixes.

5. Procédé selon l'une quelconque des revendications 1 à 4, **caractérisé en ce que,** à des fins d'étalonnage, les intensités du champ magnétique dans au moins une des deux zones de mesure sont mesurées dans une configuration spatiale déterminée et stockées.

6. Procédé selon la revendication 5, **caractérisé en ce que** l'étalonnage établit une relation entre les intensités du champ magnétique déterminées dans les respectifs plans de mesure (plan xy) et les respectives distances des plans de mesure à la surface du champ magnétique ou au centre de l'aimant permanent.

7. Procédé selon l'une quelconque des revendications 1 à 6, **caractérisé en ce que,** durant l'étalonnage, pour les respectifs points d'étalonnage dans les plans de mesure perpendiculaires à l'axe dipolaire, les valeurs d'intensité du champ (valeurs x) mesurées suivant la direction x et les valeurs d'intensité du champ (valeurs y) mesurées suivant la direction y perpendiculaire à la direction x sont stockées, les valeurs se trouvant dans un système de coordonnées (x, y), substantiellement sur des droites situées à des distances déterminées des plans de mesure aux pentes associées à la surface polaire.

8. Procédé selon la revendication 7, **caractérisé en ce que** les pentes des droites (droites d'étalonnage) sont associées aux distances des respectifs plans de mesure à la surface polaire.

9. Procédé selon l'une quelconque des revendications 1 à 8, **caractérisé en ce que**, pour la détermination de la position spatiale du point de mesure, les distances du point de mesure à l'axe dipolaire (axe z) sont déterminées à partir des valeurs x et y mesurées de l'intensité du champ.

10. Procédé selon l'une quelconque des revendications 1 à 9, **caractérisé en ce que** les valeurs de l'intensité du champ déterminées lors de l'étalonnage et la mesure sont associées à des valeurs de distance métrique.

11. Procédé selon l'une quelconque des revendications 1 à 10, **caractérisé en ce que** des trajectoires du mouvement dans le temps sont définies à partir des positions déterminées.

12. Procédé selon l'une quelconque des revendications 1 à 11, **caractérisé en ce que** des mesures de poids sont dérivées des positions déterminées.

13. Dispositif pour la détermination d'une position d'un point de mesure dans un champ magnétique permanent, lequel comprend un aimant permanent (1) qui est réalisé sous la forme d'un dipôle et génère le champ magnétique, et au moins un dispositif de détection (2) pour détecter sur des axes orthogonaux les intensités du champ magnétique au point de mesure correspondant, et un dispositif d'évaluation (10) pour déterminer la position spatiale du point de mesure dans le champ magnétique à partir des valeurs de mesure, l'au moins un dispositif de détection (2) étant disposé dans au moins une des deux zones de mesure (3, 4) qui sont directement adjacentes aux pôles (N, S) de l'aimant permanent (1), et l'intensité du champ magnétique changeant dans la zone de mesure (3, 4) considérée dans des plans perpendiculaires à la direction de l'axe dipolaire (5) du champ magnétique permanent,
**caractérisé en ce que** le dispositif d'évaluation (10) comprend un élément de mémoire (7) dans lequel les intensités du champ magnétique d'au moins une zone de mesure (3) sont stockées en fonction de la distance à la surface de pôle magnétique (6) ou au centre de l'aimant permanent (1) et de la distance à l'axe dipolaire (5).

14. Dispositif selon la revendication 13, **caractérisé en ce que** le dispositif de détection (2) comprend des capteurs de champ magnétique, lesquels mesurent les intensités du champ magnétique dans un plan de mesure (plan xy) parallèle à la surface de pôle magnétique (6) dans deux directions (axes x, y) orthogonales et dans une direction (axe z) orthogonale aux deux précédentes.

15. Dispositif selon la revendication 13 ou 14, **caractérisé en ce que** le dispositif de détection (2) ou l'aimant permanent (1) est disposé de manière fixe et l'aimant permanent (1) ou le dispositif de détection (2) est disposé de manière mobile.

16. Dispositif selon la revendication 15, **caractérisé en ce que** l'aimant permanent (1) et le dispositif de détection (2) sont mobiles l'un par rapport à l'autre le long de l'axe dipolaire (5) de l'aimant permanent (1) ou mobiles parallèlement à l'axe dipolaire (5) de l'aimant permanent (1) et/ou mobiles dans un plan perpendiculaire à l'axe dipolaire (5).

17. Dispositif selon l'une quelconque des revendications 13 à 16, **caractérisé en ce que** la section de la zone de mesure (3) parallèle à la surface de pôle magnétique (6) correspond approximativement à la forme géométrique de la surface de pôle magnétique (6).

18. Dispositif selon l'une quelconque des revendications 13 à 17, **caractérisé en ce que** l'aimant permanent (1) et le dispositif de détection (2) sont des éléments constitutifs d'un dispositif de mesure de poids.
